# EUROPEAN PATENT APPLICATION

(11) **EP 4 535 923 A1**
(43) Date of publication of application: **09.04.2025**
(21) Application number: 22944262.9
(22) Date of filing: 31.05.2022
(51) Int. Cl.: H04W 88/04, H04W 72/00

(54) **CHANNEL DISCOVERY CONTROL METHOD AND APPARATUS, DEVICE, STORAGE MEDIUM AND CHIP**

(71) Applicant: Beijing Xiaomi Mobile Software Co., Ltd., Beijing 100085 (CN)
(72) Inventor: YANG, Xing, Beijing 100085 (CN)
(74) Representative: Dehns Germany Partnerschaft mbB
(86) International application number: PCT/CN2022/096482
(87) International publication number: WO 2023/230926

(57) **Abstract**

The present disclosure relates to a channel discovery control method and apparatus, a device, a storage medium and a chip. The method comprises: in response to received configuration information, generating a first determination condition, the first determination condition being a start condition of a channel discovery process corresponding to a user equipment (UE) (S101); and in the case of determining that the UE satisfies the first determination condition, starting the channel discovery process of the UE (S102). Therefore, the start condition of the channel discovery process corresponding to the UE is adjusted according to the configuration information, and before a sidelink wireless link fails, the UE can start the channel discovery process in advance, the relay selection time is shortened, and the delay problem of data interaction is avoided.

## Description

### TECHNICAL FIELD

The present disclosure relates to the field of communication technology, and in particular, to a method for controlling channel discovery, an apparatus, a device, a storage medium, and a chip.

### BACKGROUND

To support direct communication between user equipment (UE) and UE, a sidelink communication mode is introduced, and communication may be performed between the UE and the UE through a PC-5 interface (a direct communication interface). When UE needs to communicate with a base station, but the UE is located outside the coverage range of the base station, communication between the UE and the base station may be implemented through relay of another UE located in the coverage range of the base station, where the UE located outside the coverage range of the base station is referred to as remote UE, the UE providing the relay function is referred to as relay UE, and unicast communication may be performed between the remote UE and the relay UE through the sidelink. When the channel quality between the remote UE and the relay UE is lower than a certain threshold, the remote UE may start a channel discovery process, discover another relay UE, and then perform relay reselection. In the related art, the channel discovery process of the UE needs to be triggered by waiting for a sidelink radio link failure, which easily causes a relay selection delay of the UE, and an interruption time for data interaction is relatively longer.

### SUMMARY

In order to overcome the problems existing in the related art, according to the present disclosure, there is provided a method for controlling channel discovery, an apparatus, a device, a storage medium, and a chip.

According to a first aspect of the embodiments of the present disclosure, there is provided a method for controlling channel discovery, applied to user equipment, and including:
generating a first determination condition in response to received configuration information, where the first determination condition is a start condition for a channel discovery process corresponding to the user equipment; and
starting the channel discovery process of the user equipment in a case that it is determined that the user equipment satisfies the first determination condition.

According to a second aspect of the embodiments of the present disclosure, there is provided a method for controlling channel discovery, applied to a network device, and including:
sending configuration information to user equipment, where the configuration information is used to instruct the user equipment to generate a first determination condition, the first determination condition is a start condition for a channel discovery process corresponding to the user equipment, and the channel discovery process of the user equipment is started in a case that it is determined that the user equipment satisfies the first determination condition.

According to a third aspect of the embodiments of the present disclosure, there is provided an apparatus for controlling channel discovery, applied to user equipment, and including:
a generation module, configured to generate a first determination condition in response to received configuration information, where the first determination condition is a start condition for a channel discovery process corresponding to the user equipment; and
an execution module, configured to start the channel discovery process of the user equipment in a case that it is determined that the user equipment satisfies the first determination condition.

According to a fourth aspect of the embodiments of the present disclosure, there is provided an apparatus for controlling channel discovery, applied to a network device, and including:
a sending module, configured to send configuration information to user equipment, where the configuration information is used to instruct the user equipment to generate a first determination condition, the first determination condition is a start condition for a channel discovery process corresponding to the user equipment, and the channel discovery process of the user equipment is started in a case that it is determined that the user equipment satisfies the first determination condition.

According to a fifth aspect of the embodiments of the present disclosure, there is provided user equipment, including:
a processor;
a memory, configured to store an executable instruction by the processor;
where the processor is configured to implement steps of any method for controlling channel discovery provided according to the first aspect of the present disclosure when executing the executable instruction.

According to a sixth aspect of the embodiments of the present disclosure, there is provided a network device, including:
a processor;
a memory, configured to store an executable instruction by the processor;
where the processor is configured to implement steps of the method for controlling channel discovery provided according to the second aspect of the present disclosure when executing the executable instruction.

According to a seventh aspect of the embodiments of the present disclosure, there is provided a computer-readable storage medium having a computer program instruction stored thereon, where steps of the method for controlling channel discovery provided according to the first aspect of the present disclosure are implemented when the program instruction is executed by a processor.

In the foregoing technical solution, in response to received configuration information, a first determination condition is generated, where the first determination condition is a start condition for a channel discovery process corresponding to the user equipment; and when it is determined that the user equipment satisfies the first determination condition, the channel discovery process of the user equipment is started. Therefore, the start condition for the channel discovery process corresponding to the user equipment is adjusted through the configuration information, and it is controlled whether to start based on the start condition, so that the UE can start the channel discovery process in advance before a sidelink radio link failure, thus reducing the relay selection time, and avoiding the delay problem of data interaction.

### BRIEF DESCRIPTION OF THE DRAWINGS

The accompanying drawings, which are incorporated in and constitute a part of the description, illustrate embodiments consistent with the present disclosure and, together with the description, serve to explain the principles of the present disclosure.
FIG. 1 is a flowchart of a method for controlling channel discovery according to an example embodiment.
FIG. 2 is a flowchart of a method for controlling channel discovery according to an example embodiment.
FIG. 3 is a flowchart of a method for controlling channel discovery according to an example embodiment.
FIG. 4 is a flowchart of a method for controlling channel discovery according to an example embodiment.
FIG. 5 is a block diagram of an apparatus for controlling channel discovery according to an example embodiment.
FIG. 6 is a block diagram of an apparatus for controlling channel discovery according to an example embodiment.
FIG. 7 is a block diagram of user equipment according to an example embodiment.
FIG. 8 is a block diagram of a network device according to an example embodiment.

### DETAILED DESCRIPTION

Example embodiments will now be described in detail here, examples of which are illustrated in the accompanying drawings. The following description refers to the accompanying drawings in which the same numbers in different drawings represent the same or similar elements unless otherwise represented. The implementations described in the following example embodiments do not represent all implementations consistent with the present disclosure. By contrast, they are merely examples of apparatuses and methods consistent with some aspects of the present disclosure as detailed in the appended claims.

It may be understood that "a plurality of" in the present disclosure refers to two or more, and other quantifiers are similar to it. "And/or" describes an association relationship between associated object, which indicates that there may be three relationships; for example, A and/or B may indicate three relationships that A exists alone, A and B exist at the same time, and B exists alone. The character "/" generally indicates an "or" relationship between the associated objects before and after. The singular forms "a", "said", and "the" are intended to include the plural forms as well, unless the context clearly indicates other meanings.

It may be further understood that the terms "first", "second", or the like are used to describe various kinds of information, but these information should not be limited to these terms. These terms are only used to distinguish the same kind of information from each other and do not represent a particular order or degree of importance. In fact, expressions such as "first" and "second" may be used interchangeably. For example, the first XX may also be referred to as the second XX without departing from the scope of the present disclosure, and similarly, the second XX may also be referred to as the first XX

It should be further understood that although the operations are described in a specific order in the accompanying drawings, it should not be understood as these operations are required to be performed in the specific order or serial order shown, or all illustrated operations are required to be performed to obtain a desired result. In a particular environment, multitasking and parallel processing may be advantageous.

It should be noted that all actions of acquiring signals, information, or data in the present disclosure are performed on the premise of conforming to the corresponding data protection regulation policy of the country of the location, and obtaining the authorization by the owner of the corresponding device.

Before the method for controlling channel discovery provided by the present disclosure is described, the scenario involved in the present disclosure is firstly introduced. In the scenario provided in the present disclosure, data communication may be directly performed between the UE and the UE through the PC-5 communication interface, so that the remote UE located outside the coverage of the base station may establish data communication with the network device (for example, a base station) by using the relay UE, or, the remote UE may be connected to the relay UE through relay of another UE, to implement connection between the remote UE and the relay UE, and may further communicate with the network device by using the relay service provided by the relay UE. Since the above another UE provides the relay service between the remote UE and the relay UE, in order to distinguish, in various embodiments of the present disclosure, the remote UE and the relay UE for providing the relay service between the UE and the network device may be referred to as opposite end UE to each other, and the UE providing the relay service between the remote UE and the relay UE may be referred to as relay UE.

When the channel quality between the UE and the opposite end UE or the channel quality between the UE and the relay UE is lower than a certain threshold, the UE may start a channel discovery process to discover another relay UE, and then perform relay reselection. For example, the UE-A is remote UE; the UE-B is opposite end UE of the UE-A; the UE-A may not be directly connected to the UE-B, but is in communication connection with the UE-B through the relay of the UE-C, where the UE-B is the UE that provides a relay function between the UE and the network device; and unicast communication may be performed between all UE through the sidelink. When the channel quality between the UE-A and the UE-B is lower than a certain threshold, or the channel quality between the UE-A and the UE-C is lower than a certain threshold, the UE-A may start a channel discovery process including sending and/or receiving of the discovery signal, to discover the relay UE, the channel quality of which satisfies a communication condition. The relay UE satisfying the communication condition may be the relay UE that provides a relay service between UE and UE, or may be the UE that provides a relay service between the remote UE and the network device, for performing relay selection.

**In** the related art, the channel discovery start process of the UE-A is triggered mainly according to that the channel quality between the UE-A and the UE-B gets poorer, or the channel quality between the UE-A and the UE-C gets poorer. However, when the UE-C does not perform sidelink transmission, the UE-A cannot obtain the channel quality condition between the UE-A and the UE-C, and the channel discovery process may be triggered only in a case of sidelink radio link failure between the UE-A and the UE-B, resulting in a relay selection delay and a relative longer interruption time of data transmission.

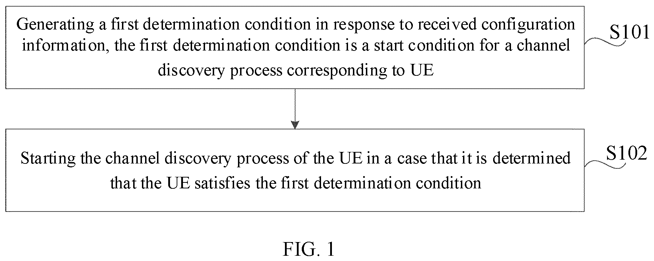

In view of this, according to an embodiment of the present disclosure, there is provided a method for controlling channel discovery. FIG. 1 is a flowchart of a method for controlling channel discovery according to an example embodiment. As shown in FIG. 1, the control method is applied in UE, and the UE may serve as the remote UE (referring to the UE-A), or may be the opposite end UE of the remote UE (refer to the foregoing UE-B). The method includes following steps.

In step S101, a first determination condition is generated in response to received configuration information, where the first determination condition is a start condition for a channel discovery process corresponding to the UE.

For example, data communication may be established between various devices in the embodiments of the present disclosure through 5G (fifth generation mobile communication system) communication technology. Based on a sidelink communication mode, direct communication may be performed between UE and UE through a PC-5 interface, where data communication may be established between the UE and the relay UE and between the UE and the opposite end UE through the PC-5 communication interface. When the UE is located in the communication range of the opposite end UE, a direct communication link from the UE to the opposite end UE may be established through the PC-5 communication interface, to implement direct communication between the UE and the opposite end UE. When the UE is located outside the communication range of the opposite end UE, an indirect communication link from the UE to the relay UE to the opposite end UE may be established through the PC-5 communication interface, to implement indirect communication between the UE and the opposite end UE. Among them, in a case that the UE is remote UE, the opposite end UE is the UE providing a relay service between the UE and the network device. In a case that the UE is the UE providing a relay service between the UE and the network device, the opposite end UE is remote UE.

The UE is set with a set start condition for starting channel discovery. After the configuration information is received, the set start condition may be modified through the configuration information to generate the first determination condition, so that the UE determines whether to start the channel discovery process through the first determination condition so as to perform relay reselection. Among them, the configuration information may be sent to the UE by a network device in communication connection with the UE; and, the configuration information may also be delivered to the UE by another UE after the network device sends the configuration information to another UE.

In step S102, in a case that it is determined that the UE satisfies the first determination condition, the channel discovery process of the UE is started.

For example, according to the first determination condition generated in the foregoing step, a channel quality parameter corresponding to the UE may be determined, where the channel quality parameter may reflect a channel quality condition of the current service channel for the UE. By comparing the channel quality parameter with a set parameter corresponding to the first determination condition, it is determined whether the channel quality of the current service channel for the UE satisfies the first determination condition, and the channel discovery process of the UE is started in a case that the UE satisfies the first determination condition. Among them, the current service channel for the UE may be a communication channel between the UE and the opposite end UE, or may be a communication channel between the UE and the relay UE. When the channel quality of the current service channel for the UE satisfies the first determination condition, the channel discovery process of the UE is triggered, so that the UE determines another relay UE satisfying the condition, and a communication link form the UE to another relay UE to the opposite end UE is formed through another relay UE, thus implementing normal communication between the UE and the opposite end UE.

According to the foregoing technical solution, the UE generates the first determination condition for determining the channel discovery process according to the configuration information, and determines whether the channel quality corresponding to the current service channel for the remote UE satisfies the start condition according to the first determination condition, and then determines to start the relay reselection of the UE. The start condition for the channel discovery process corresponding to the UE is adjusted through the configuration information. Before the sidelink radio link failure, the UE can start the channel discovery process in advance, so that the relay selection time is reduced, and the delay problem of data interaction is avoided.

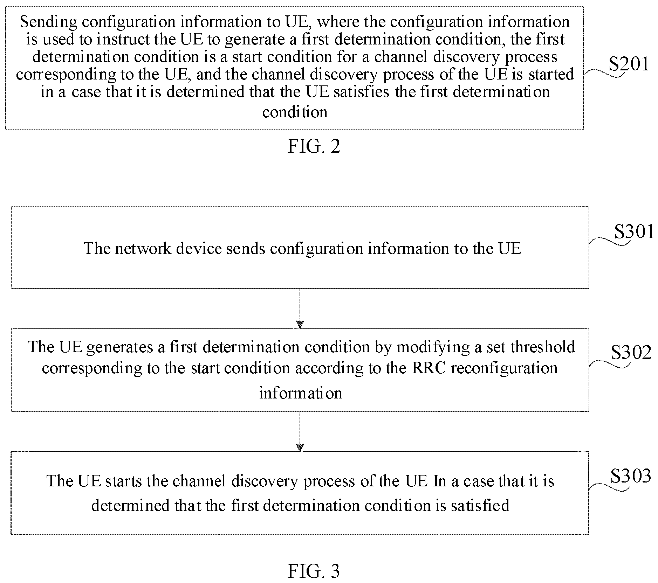

FIG. 2 is a flowchart of a method for controlling channel discovery according to an example embodiment. As shown in FIG. 2, the control method is applied in a network device, and the method includes the following steps.

In step S201, configuration information is sent to UE, where the configuration information is used to instruct the UE to generate a first determination condition, the first determination condition is a start condition for a channel discovery process corresponding to the UE, and the channel discovery process of the UE is started in a case that it is determined that the UE satisfies the first determination condition.

For example, the embodiment of the present disclosure is applied to a network device. The network device may be a base station for performing public mobile communication, for example, it may be a base station configured to perform data transceiving. The base station may be a gNodeB in 5G. Alternatively, the network device may be a terminal device having a communication data transceiving function, for example, a server, a signal transfer station, or another possible network element, etc. The configuration information is sent to the UE through a service channel between the network device and the UE (a channel between the UE and the network device, or a channel that the UE is connected to the network device through a relay service). The UE generates a first determination condition according to the configuration information, where the first determination condition is used to determine, according to a channel quality parameter between the UE and the opposite end UE or a channel quality parameter between the UE and the relay UE, whether the UE satisfies the first determination condition; and when the service channel corresponding to the UE satisfies the first determination condition, the channel discovery process of the UE is started for performing relay reselection so as to form a communication link from the UE to another relay UE to the opposite end UE, thus implementing normal communication between the UE and the opposite end UE.

According to the foregoing technical solution, the UE generates the first determination condition for determining the channel discovery process according to the configuration information, and determines whether the channel quality corresponding to the current service channel for the UE satisfies the start condition according to the first determination condition, and then determines to start the relay reselection of the UE. The start condition for the channel discovery process corresponding to the UE is adjusted through the configuration information. Before the sidelink radio link failure, the UE can start the channel discovery process in advance, so that the relay selection time is reduced, and the delay problem of data interaction is avoided.

FIG. 3 is a flowchart of a method for controlling channel discovery according to an example embodiment. As shown in FIG. 3, the method includes the following steps.

In step S301, the network device sends configuration information to the UE.

For example, that the network device sends the configuration information to the UE is the same as the method in step S201, and refer to step S201.

It is worth mentioning that, in the embodiment of the present disclosure, the configuration information is used by the UE to generate, through the configuration information, a first determination condition for determining whether to start a channel discovery process. The configuration information may be RRC (Connection Reconfiguration) reconfiguration information, and the RRC reconfiguration information may be an RRC (Connection Reconfiguration) reconfiguration message or a sidelink RRC reconfiguration message.

The UE generates a first determination condition in response to the received configuration information, where the first determination condition is a start condition for a channel discovery process corresponding to the UE. For example, in an implementation, the following steps may be included.

In step S302, the UE generates a first determination condition by modifying a set threshold corresponding to the start condition according to the RRC reconfiguration information.

For example, in the embodiment of the present disclosure, the UE is configured with a set start condition for determining whether to start a channel discovery process; and in the start condition, there is correspondingly a set threshold for measuring the current channel quality of the UE. The channel quality parameter between the UE and the opposite end UE, or the channel quality parameter between the UE and the relay UE, may be obtained; and the channel quality parameter may be compared with the set threshold. When it is determined that the channel quality parameter is greater than (or less than) the set threshold, it is determined that the UE starts the channel discovery process.

After receiving the RRC reconfiguration information sent by the network device, the UE modifies the set threshold corresponding to the start condition in the UE according to the configuration item in the RRC reconfiguration information, so as to generate the first determination condition. It should be noted that the first determination condition may be the same as the channel quality parameter that needs to be obtained in the start condition, but the corresponding thresholds may be different. Moreover, in order to enable the UE to start the channel discovery process in advance, the threshold corresponding to the first determination condition is higher than the threshold corresponding to the set start condition. For example, a reference signal receiving power (RSRP) parameter is used as a determining basis, and an RSRP threshold corresponding to the set start condition may be set to -90 dBm. When the first determination condition is generated, the RSRP threshold may be adjusted to -70 dBm. When the RSRP value of the serving channel corresponding to the UE is -75 dBm, it may be determined that the UE satisfies the first determination condition, and the channel discovery process of the UE is triggered.

For example, the first determination condition in the foregoing steps may include one or more of the following cases.

A first channel measurement result between the UE and the relay device is less than a first threshold.

A second channel measurement result between the UE and the opposite end device is less than a second threshold.

A number of data retransmission that is received reaches a first value.

A number of feedback loss between the UE and the opposite end device reaches a second value.

The relay device may be the foregoing relay UE, and the opposite end device may be the foregoing opposite end UE.

It is worth mentioning that in the embodiments of the present disclosure, the first determination condition may be determined in a plurality of manners. For example, when the UE performs data communication with the opposite end UE through the communication link from the UE to the relay UE to the opposite end UE, the first channel measurement result may be generated by measuring the channel quality between the UE and the relay UE, and the corresponding first determination condition may be determined as determining whether the first channel measurement result is less than the first threshold. When it is determined that the first channel measurement result is less than the first threshold, the channel discovery process of the UE is started.

Optionally, when the UE performs data communication with the opposite end UE through the communication link from the UE to the opposite end UE, the second channel measurement result may be generated by measuring the channel quality of the communication channel between the UE and the opposite end UE, and the corresponding first determination condition may be determined as determining whether the second channel measurement result is less than the second threshold. When it is determined that the second channel measurement result is less than the first threshold, the channel discovery process of the UE is started. Among them, the second channel measurement result may be represented by a reference signal receiving power (RSRP), a reference signal receiving quality (RSRQ), an LTE reference signal receiving quality) or a signal to interference plus noise ratio (SINR).

Optionally, the UE is set with a first timer, and the first timer is configured to start timing or reset time when the channel quality corresponding to the service channel for the UE gets poorer. The first determination condition is determined as whether the time corresponding to the first timer reaches a timing threshold. When it is determined that the time corresponding to the first timer reaches the timing threshold, the channel discovery process of the UE is started.

Optionally, when the UE performs data communication, data retransmission may be initiated as data transmission is blocked due to poor channel quality. Therefore, in the embodiments of the present disclosure, by obtaining the number of data retransmission between the UE and the opposite end UE or between the UE and the relay UE received by the UE, the corresponding first determination condition is determined as determining whether the number of data retransmission reaches a first value. When it is determined that the number of data retransmission reaches the first value, the channel discovery process of the UE is started. For example, the number of data retransmission received by the UE may include a physical layer retransmission, and may further include a number of data retransmission sent by the sidelink RLC (Radio Link Control) entity to the UE.

Optionally, by determining the number of data loss between the UE and the opposite end UE through a sidelink MAC (Medium Access Control) entity, the corresponding first determination condition is determined as determining whether the number of data loss reaches a second value. When it is determined that the number of data loss reaches the second value, the first timer corresponding to the UE is started or reset. For example, the number of data loss between the UE and the opposite end UE may be a number of continuous feedback loss, or may be a sum of numbers of discontinuous feedback loss.

It is worth mentioning that the first determination condition in the embodiments of the present disclosure may be one or more of the foregoing first determination conditions. For example, when the first determination condition is any one of the foregoing first determination conditions, the sensitivity of the UE to the channel quality may be improved, so that the UE starts the channel discovery process in advance, the relay selection time is reduced, and the delay problem of data interaction is avoided. When the first determination condition is any more than one of the foregoing first determination conditions, the accuracy of the first determination condition may be ensured, thus ensuring that the UE starts the channel discovery process accurately.

Optionally, in an implementation, the channel quality parameter may include one or more of the first threshold, the second threshold, the timing threshold, the first value, and the second value. The foregoing step S302 may include following steps.
(1) A target threshold of the channel quality parameter carried in the RRC reconfiguration information is obtained.
   For example, the UE performs parsing on the RRC reconfiguration information to determine the target threshold corresponding to the channel quality parameter in the RRC reconfiguration information. For example, the channel quality parameter may include that the target threshold of the first threshold is -70 dBm, the target threshold of the second threshold is -65 dBm, the target threshold of the timing threshold is 0.7s, the target threshold of the first value is 5, and the target threshold of the second value is 4.
(2) The first determination condition is generated by modifying the threshold of the channel quality parameter according to the target threshold.

For example, after the target threshold of the channel quality parameter is determined by using the foregoing steps, the current threshold of the channel quality parameter is replaced with the target threshold to generate the first determination condition. For example, if the threshold of the first threshold is currently -80dBm, the threshold of the first threshold is modified to -70 dBm according to the foregoing target threshold of -70 dBm.

In step S303, the UE starts the channel discovery process of the UE in a case that it is determined that the first determination condition is satisfied.

For example, the method for the UE to starting the channel discovery process when it is determined that the first determination condition is satisfied, is the same as the method in step S102, reference may be made to step S102, and details are not described here again.

According to the foregoing technical solution, the UE generates the first determination condition for determining the channel discovery process according to the configuration information, and determines whether the channel quality corresponding to the current service channel for the UE satisfies the start condition according to the first determination condition, and then determines to start the relay reselection of the UE. The start condition for the channel discovery process corresponding to the UE is adjusted through the configuration information. Before the sidelink radio link failure, the UE can start the channel discovery process in advance, so that the relay selection time is reduced, and the delay problem of data interaction is avoided.

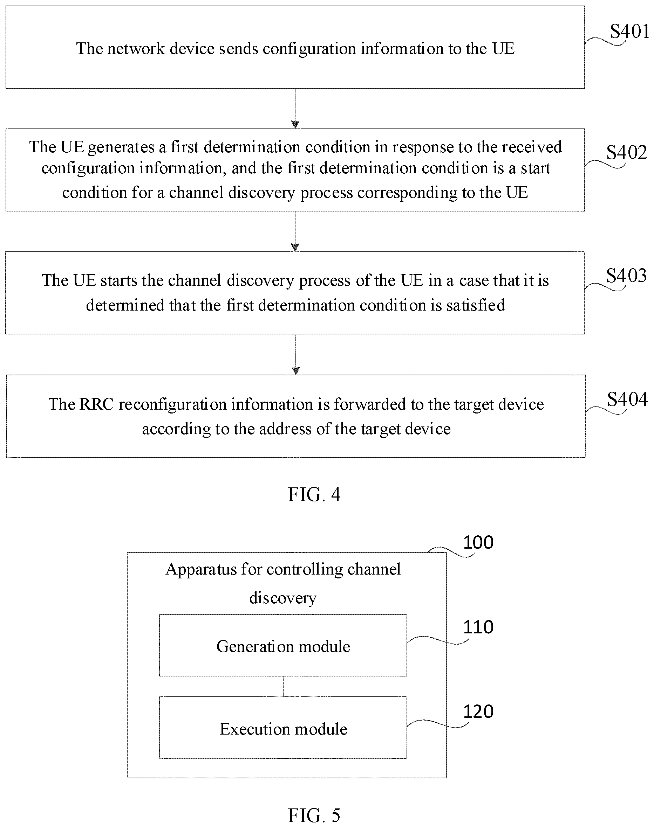

FIG. 4 is a flowchart of a method for controlling channel discovery according to an example embodiment. As shown in FIG. 4, the method includes the following steps.

In step S401, the network device sends configuration information to the UE.

For example, the method for the network device to send the configuration information to the UE is the same as the method in step S201, reference may be made to step S201, and details are not described here again.

In step S402, the UE generates a first determination condition in response to the received configuration information, where the first determination condition is a start condition for a channel discovery process corresponding to the UE.

For example, in the embodiments of the present disclosure, the first determination condition is determined as whether the time of the first timer corresponding to the UE reaches the timing threshold. When it is determined that the time corresponding to the first timer reaches the timing threshold, the channel discovery process of the UE is started.

The UE is set with a first timer, and the first timer starts timing or resets time when the channel quality corresponding to the service channel for the UE gets poorer, where determining whether the channel quality corresponding to the service channel for the UE gets poorer may be performed according a second determination condition. In a case that the UE satisfies the second determination condition, the first timer starts timing or restarts timing. The second determination condition includes one or more of the following cases.

The first channel measurement result between the user equipment and the relay device is less than a third threshold.

The second channel measurement result between the user equipment and the opposite end device is less than a fourth threshold.

The number of a data retransmission instruction that is received reaches a third value.

The number of feedback loss between the user equipment and the opposite end device reaches a fourth value.

It is detected that an access type timer corresponding to the user equipment is started.

Among them, the relay device may be the foregoing relay UE, and the opposite end device may be the foregoing opposite end UE.

It is worth mentioning that in the embodiments of the present disclosure, the second determination condition may be determined in a plurality of manners. For example, when the UE performs data communication with the opposite end UE through the communication link from the UE to the relay UE to the opposite end UE, the first channel measurement result may be generated by measuring the channel quality between the UE and the relay UE, and the corresponding second determination condition may be determined as determining whether the first channel measurement result is less than the third threshold. When it is determined that the first channel measurement result is less than the third threshold, the first timer corresponding to the UE is started or reset.

Optionally, when the UE performs data communication with the opposite end UE through the communication link from the UE to the opposite end UE, the second channel measurement result may be generated by measuring the channel quality between the UE and the opposite end UE, and the corresponding second determination condition may be determined as determining whether the second channel measurement result is less than the fourth threshold. When it is determined that the second channel measurement result is less than the fourth threshold, the first timer corresponding to the UE is started or reset.

Optionally, when the UE performs data communication, data retransmission may be initiated as data transmission is blocked due to poor channel quality. Therefore, in the embodiments of the present disclosure, by obtaining the number of data retransmission between the UE and the opposite end UE or between the UE and the relay UE received by the UE, the corresponding second determination condition is determined as determining whether the number of data retransmission reaches the third value. When it is determined that the number of data retransmission reaches the third value, the first timer corresponding to the UE is started or reset. For example, the number of data retransmission received by the UE may include the physical layer retransmission, and may further include the number of data retransmission sent by the sidelink RLC (Radio Link Control Protocol) entity to the UE.

Optionally, by determining the number of data loss between the UE and the opposite end UE through the sidelink MAC (Medium Access Control) entity, the corresponding second determination condition is determined as determining whether the number of data loss reaches the fourth value. When it is determined that the number of data loss reaches the fourth value, the channel discovery process of the UE is started. For example, the number of data loss between the UE and the opposite end UE may be a number of continuous feedback loss, or may be a sum of numbers of discontinuous feedback loss.

Optionally, the UE further includes an access type timer. The access type timer may be a T400 timer. The RRC connection establishment request message of the UE is initiated by an RRC layer of the UE, and after a random access instruction is sent to the MAC layer, the access type timer is started. When the access type timer reaches the set threshold, the UE resets the MAC layer, releases the MAC layer configuration, resets the RLC entity, and sends a notification of sidelink link failure. In the embodiment of the present disclosure, the on state of the access type timer T400 is detected, and the corresponding second determination condition is determined as determining whether the T400 reaches the start condition. When it is determined that T400 is started, the first timer corresponding to the UE is started or reset.

It is worth mentioning that the second determination condition in the embodiments of the present disclosure may be one or more of the foregoing second determination conditions. For example, when the second determination condition is any one of the foregoing second determination conditions, the first timer may be quickly started, and when the first timer reaches the timing threshold, it is determined that the first determination condition is satisfied, so that the channel discovery process of the UE is started, the sensitivity of the UE to the channel quality may be improved, thus the UE may start the channel discovery process in advance, the relay selection time is shortened, and the delay problem of data interaction is avoided. When the second determination condition is any more than one of the foregoing second determination conditions, the accuracy of the start of the first timer may be ensured, thus ensuring that the UE starts the channel discovery process accurately.

Optionally, in an implementation, the control method may further include following step.

In a case that the UE does not satisfy the second determination condition, the first timer is stopped.

For example, by using the second determination condition in the foregoing solution, after it is determined that the first timer satisfies the start condition or reset condition, and the first timer is started to start timing, it is needed to continue measuring the channel parameter corresponding to the second determination condition. After the first timer starts timing and before it reaches the timing threshold, the first timer is stopped when it is determined that the UE does not satisfy the second determination condition through the channel parameter, until the UE satisfies the second determination condition for the next time, and then the first timer is reset and started.

In step S403, in a case that it is determined that the first determination condition is satisfied, the UE starts the channel discovery process of the UE.

For example, the method for the UE to starting the channel discovery process when it is determined that the first determination condition is satisfied, is the same as the method in step S102, reference may be made to step S102, and details are not described here again.

It is worth mentioning that the channel sending process of the UE in the embodiments of the present disclosure may include a process in which the UE sends a discovery signal to the opposite end UE or the relay UE, and may further include a process in which the UE receives the discovery signal sent by the opposite end UE or the relay UE. Among them, the discovery signal may be a relay discovery signal from the UE to the network, or a relay discovery signal or a non-relay discovery signal from the UE to the opposite end UE.

Optionally, in an implementation, the RRC reconfiguration information includes an address of the target UE, and the method may further include following step.

In step S404, the RRC reconfiguration information is forwarded to the target device according to the address of the target device.

For example, the target device may be an address of the target UE. There may be no direct link established between the target UE and the network device, and it is needed to forward the RRC reconfiguration information to the target UE by the current UE, so that the target UE performs the foregoing method according to the RRC reconfiguration information after receiving the RRC reconfiguration information.

According to the foregoing technical solution, the UE generates the first determination condition for determining the channel discovery process according to the configuration information, and determines whether the channel quality corresponding to the current service channel for the UE satisfies the start condition according to the first determination condition, and then determines to start the relay reselection of the UE. The start condition for the channel discovery process corresponding to the UE is adjusted through the configuration information. Before the sidelink radio link failure, the UE can start the channel discovery process in advance, so that the relay selection time is reduced, and the delay problem of data interaction is avoided.

FIG. 5 is a block diagram of an apparatus for controlling channel discovery according to an example embodiment. The apparatus 100 is applied to UE. Referring to FIG. 5, the apparatus 100 includes a generation module 110 and an execution module 120.

The generation module 110 is configured to generate a first determination condition in response to received configuration information, where the first determination condition is a start condition for a channel discovery process corresponding to the user equipment.

The execution module 120 is configured to start the channel discovery process of the user equipment in a case that it is determined that the user equipment satisfies the first determination condition.

Optionally, the first determination condition includes one or more of following cases.

A first channel measurement result between the UE and a relay device is less than a first threshold.

A second channel measurement result between the UE and an opposite end device is less than the second threshold.

A first timer corresponding to the UE reaches a timing threshold.

A number of data retransmission that is received reaches a first value.

A number of feedback loss between the UE and the opposite end device reaches a second value.

Optionally, the first timer starts timing or restart timing in a case that the UE satisfies a second determination condition, and the second determination condition includes one or more of following cases.

The first channel measurement result between the UE and the relay device is less than a third threshold.

The second channel measurement result between the UE and the opposite end device is less than a fourth threshold.

The number of a data retransmission instruction that is received reaches a third value.

The number of feedback loss between the UE and the opposite end device reaches a fourth value.

It is detected that the access type timer corresponding to the user equipment is started.

Optionally, the apparatus 100 further includes a determination module, and the determination module is configured to:
stop the first timer in a case that the UE does not satisfy the second determination condition.

Optionally, the configuration information is carried by an RRC reconfiguration message or a sidelink RRC reconfiguration message, and the generation module 110 further includes a generation submodule.

The generation submodule is configured to generate the first determination condition by modifying a threshold of a channel quality parameter corresponding to the start condition according to the RRC reconfiguration message.

Optionally, the channel quality parameter includes one or more of the first threshold, the second threshold, the timing threshold, the first value, and the second value; and the generation submodule may be further configured to:
obtain a target threshold of the channel quality parameter carried in the RRC reconfiguration information; and
generate the first determination condition by modifying the threshold of the channel quality parameter according to the target threshold.

Optionally, the RRC reconfiguration information includes an address of a target device, and the sending module is configured to:
forward the RRC reconfiguration information to the target device according to the address of the target device.

Optionally, the channel discovery process includes a process of sending a discovery signal, or a process of receiving a discovery signal.

Optionally, the discovery signal includes a relay discovery signal from the user equipment to the network, or a relay discovery signal or a non-relay discovery signal from the user equipment to user equipment.

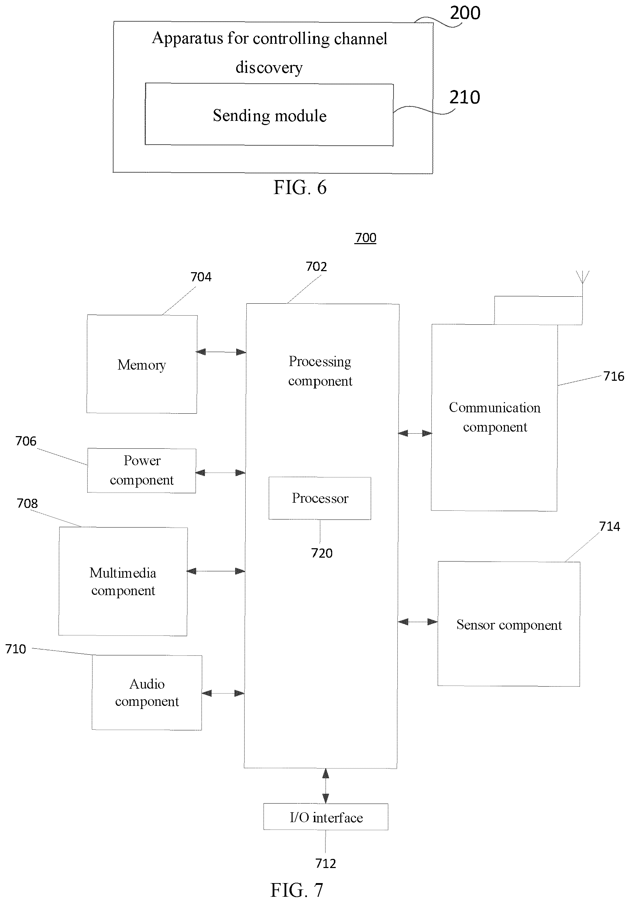

FIG. 6 is a block diagram of an apparatus for controlling channel discovery according to an example embodiment, and the apparatus 200 is applied to a network device. Referring to FIG. 6, the apparatus 200 includes a sending module 210.

The sending module 210 is configured to send configuration information to user equipment, where the configuration information is used to instruct the UE to generate a first determination condition, the first determination condition is a start condition for a channel discovery process corresponding to the UE, and the channel discovery process of the UE is started in a case that it is determined that the UE satisfies the first determination condition.

According to the foregoing technical solution, the UE generates the first determination condition for determining the channel discovery process according to the configuration information, and determines whether the channel quality corresponding to the current service channel for the UE satisfies the start condition according to the first determination condition, and then determines to start the relay reselection of the UE. The start condition for the channel discovery process corresponding to the UE is adjusted through the configuration information. Before the sidelink radio link failure, the UE can start the channel discovery process in advance, so that the relay selection time is reduced, and the delay problem of data interaction is avoided.

FIG. 7 is a block diagram of user equipment 700 according to an example embodiment. For example, the user equipment 700 may be the foregoing test device or synchronization device; and the user equipment 700 may be a mobile phone, a computer, a digital broadcast terminal, a message transceiving device, a game console, a tablet device, a medical device, a fitness device, a personal digital assistant, or the like.

Referring to FIG. 7, the user equipment 700 may include one or more of the following components: a processing component 702, a memory 704, a power component 706, a multimedia component 708, an audio component 710, an input/output interface 712, a sensor component 714, and a communication component 716.

The processing component 702 typically controls overall operations of the user equipment 700, such as operations associated with display, telephone calls, data communications, camera operations, and recording operations. The processing component 702 may include one or more processors 720 to execute instructions to complete all or part of the steps of the delay measurement method. In addition, the processing component 702 may include one or more modules to facilitate interaction between the processing component 702 and other components. For example, the processing component 702 may include a multimedia module to facilitate interaction between the multimedia component 708 and the processing component 702.

The memory 704 is configured to store various types of data to support the operation of the user equipment 700. Examples of such data include instructions for any application or method operating on user equipment 700, contact data, phonebook data, messages, pictures, videos, etc. The memory 704 may be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 706 provides power to various components of the user equipment 700. The power component 706 may include a power management system, one or more power sources, and other components associated with generating, managing, and distributing power for the user equipment 700.

The multimedia component 708 includes a screen providing an output interface between the user equipment 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touching, sliding, and gestures on the touch panel. The touch sensor may not only sense a boundary of a touching or sliding action, but also detect a duration and pressure associated with the touching or sliding action. In some embodiments, the multimedia component 708 includes a front camera and/or a rear camera. When the user equipment 700 is in an operation mode, such as a photographing mode or a video mode, the front camera and/or the rear camera may receive external multimedia data. Each of the front camera and the rear camera may be a fixed optical lens system or have a focal length and an optical zoom capability.

The audio component 710 is configured to output and/or input audio signals. For example, the audio component 710 includes a microphone (MIC) configured to receive an external audio signal when the user equipment 700 is in an operation mode, such as a call mode, a recording mode, and a speech recognition mode. The received audio signal may be further stored in the memory 704 or transmitted via the communication component 716. In some embodiments, the audio component 710 further includes a speaker to output audio signals.

The input/output interface 712 provides an interface between the processing component 702 and a peripheral interface module, and the peripheral interface module may be a keyboard, a click wheel, a button, or the like. The button may include, but is not limited to, a home button, a volume button, a starting button, and a locking button.

The sensor component 714 includes one or more sensors to provide status assessments of various aspects of the user equipment 700. For example, the sensor component 714 may detect the on/off state of the user equipment 700, and the relative positioning of the components; for example, the components are the display and keypad of the device 700. The sensor component 714 may also detect a position change of the user equipment 700 or of one component of the user equipment 700, the presence or absence of contact by the user with the user equipment 700, the orientation or acceleration/deceleration of the user equipment 700, and the temperature change of the user equipment 700. The sensor component 714 may include a proximity sensor configured to detect the presence of nearby objects without any physical contact. The sensor component 714 may also include a optical sensor, such as a CMOS or CCD image sensor, for use in imaging applications. In some embodiments, the sensor component 714 may further include an acceleration sensor, a gyroscope sensor, a magnetic sensor, a pressure sensor, or a temperature sensor.

The communication component 716 is configured to facilitate wired or wireless communication between the user equipment 700 and other devices. The user equipment 700 may access a wireless network based on a communication standard, such as WiFi, 2G, or 3G, or a combination of them. In an example embodiment, the communication component 716 receives a broadcast signal or broadcast associated information from an external broadcast management system via a broadcast channel. In an example embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an example embodiment, the user equipment 700 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for method for controlling channel discovery.

In an example embodiment, there is further provided a non-transitory computer-readable storage medium including an instruction, such as a memory 704 including an instruction. The instruction may be executed by the processor 720 of the user equipment 700 to complete the delay measurement method. For example, the non-transitory computer-readable storage medium may be a ROM, a random access memory (RAM), a CD-ROM, a magnetic tape, a floppy disk, an optical data storage device, or the like.

In addition to independent user equipment, the apparatus may be a part of independent user equipment. For example, in an embodiment, the apparatus may be an integrated circuit (IC) or a chip, where the integrated circuit may be an IC or a set of more than one IC. The chip may include, but is not limited to, a graphics processing unit (GPU), a central processing unit (CPU), a field programmable gate array (FPGA), a digital signal processor (DSP), an application specific integrated circuit (ASIC), a system on chip (SOC), or the like. The integrated circuit or chip may be configured to execute an executable instruction (or code) to implement the foregoing method for controlling channel discovery. Among them, the executable instruction may be stored in the integrated circuit or the chip, or may be obtained from another apparatus or device. For example, the integrated circuit or the chip includes a processor, a memory, and an interface configured to communicate with another apparatus. The executable instruction may be stored in the processor, and when the executable instruction is executed by the processor, the foregoing method for controlling channel discovery is implemented. Alternatively, the integrated circuit or chip may receive an executable instruction through the interface and transmit the executable instruction to the processor for execution, to implement the foregoing method for controlling channel discovery.

In another example embodiment, there is further provided a computer program product. The computer program product includes a computer program executable by a programmable apparatus, and the computer program has a code portion for performing the method for controlling channel discovery described above when the computer program is executed by the programmable apparatus.

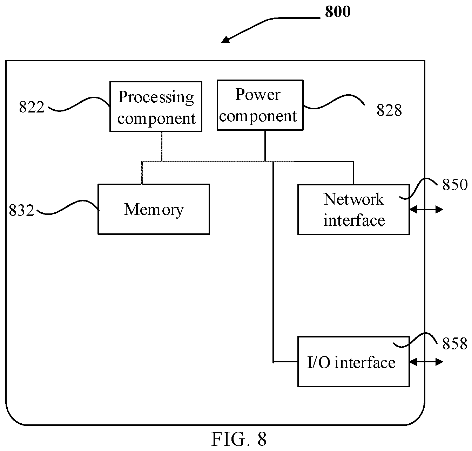

FIG. 8 is a block diagram of a network device 800 according to an example embodiment. For example, the network device 800 may be provided as a server, and may be used as the synchronization device or the measurement device. Referring to FIG. 8, the network device 800 includes a processing component 822, which further includes one or more processors, and memory resources represented by the memory 832 for storing an instruction, such as an application, executable by the processing component 822. The application program stored in the memory 832 may include one or more modules each corresponding to a set of instructions. In addition, the processing component 822 is configured to execute the instruction to perform the method for controlling channel discovery.

The network device 800 may also include a power component 826 configured to perform power management of the network device 800, a wired or wireless network interface 850 configured to connect the network device 800 to the network, and an input/output interface 858. The network device 800 may operate based on operating systems stored in the memory 832, such as Windows Server ^{™}, MAC OS X ^{™}, Unix ^{™}, Linux ^{™}, FreeBSD ^{™}, or the like.

Other embodiments of the present disclosure will be apparent to those skilled in the art from consideration of the description and practice of the present disclosure. The present application is intended to cover any variations, uses, or adaptations of the present disclosure following the general principles of the present disclosure and including common general knowledge and conventional technical means in the art not disclosed in the present disclosure. It is intended that the description and examples are considered as examples only, with a true scope and spirit of the present disclosure being indicated by the following claims.

It should be understood that the present disclosure is not limited to the precise structures that have been described above and shown in the accompanying drawings, and various modifications and changes may be made without departing from the scope of the present disclosure. It is intended that the scope of the present disclosure is only limited by the appended claims.

## Claims

1. A method for controlling channel discovery, performed by user equipment, and comprising:
generating a first determination condition in response to received configuration information, wherein the first determination condition is a start condition for a channel discovery process corresponding to the user equipment; and
starting the channel discovery process of the user equipment in a case that it is determined that the user equipment satisfies the first determination condition.

2. The method according to claim 1, wherein the first determination condition comprises one or more of:
a first channel measurement result between the user equipment and a relay device being less than a first threshold;
a second channel measurement result between the user equipment and an opposite end device being less than a second threshold;
a first timer corresponding to the user equipment reaching a timing threshold;
a number of data retransmission that is received reaching a first value; and
a number of feedback loss between the user equipment and the opposite end device reaching a second value.

3. The method according to claim 2, wherein,
the first timer starts timing or restarts timing in a case that the user equipment satisfies a second determination condition, and the second determination condition comprises one or more of:
the first channel measurement result between the user equipment and the relay device being less than a third threshold;
the second channel measurement result between the user equipment and the opposite end device being less than a fourth threshold;
the number of a data retransmission instruction that is received reaching a third value;
the number of feedback loss between the user equipment and the opposite end device reaching a fourth value; and
detecting that an access type timer corresponding to the user equipment is started.

4. The method according to claim 3, further comprising:
stopping the first timer in a case that the user equipment does not satisfy the second determination condition.

5. The method according to claim 2, wherein the configuration information is carried by an RRC reconfiguration message, and generating the first determination condition in response to the received configuration information comprises:
generating the first determination condition by modifying a threshold of a channel quality parameter corresponding to the start condition according to the RRC reconfiguration message.

6. The method according to claim 5, wherein the channel quality parameter comprises one or more of the first threshold, the second threshold, the timing threshold, the first value, and the second value; and generating the first determination condition by modifying the threshold of the channel quality parameter corresponding to the start condition according to the RRC reconfiguration information comprises:
obtaining a target threshold of the channel quality parameter carried in the RRC reconfiguration information; and
generating the first determination condition by modifying the threshold of the channel quality parameter according to the target threshold.

7. The method according to claim 5, wherein the RRC reconfiguration information comprises an address of a target device, and the method further comprises:
forwarding the RRC reconfiguration information to the target device according to the address of the target device.

8. The method according to any one of claims 1 to 7, wherein the channel discovery process comprises a process of sending a discovery signal, or a process of receiving a discovery signal.

9. The method according to any one of claim 8, wherein the discovery signal comprises: a relay discovery signal from the user equipment to a network, or a relay discovery signal or a non-relay discovery signal from the user equipment to user equipment.

10. A method for controlling channel discovery, performed by a network device, and comprising:
sending configuration information to user equipment, wherein the configuration information is used to instruct the user equipment to generate a first determination condition, the first determination condition is a start condition for a channel discovery process corresponding to the user equipment, and the channel discovery process of the user equipment is started in a case that it is determined that the user equipment satisfies the first determination condition.

11. An apparatus for starting channel discovery, applied to user equipment, and comprising:
a generation module, configured to generate a first determination condition in response to received configuration information, wherein the first determination condition is a start condition for a channel discovery process corresponding to the user equipment; and
an execution module, configured to start the channel discovery process of the user equipment in a case that it is determined that the user equipment satisfies the first determination condition.

12. An apparatus for starting channel discovery, applied to a network device, and comprising:
a sending module, configured to send configuration information to user equipment, wherein the configuration information is used to instruct the user equipment to generate a first determination condition, the first determination condition is a start condition for a channel discovery process corresponding to the user equipment, and the channel discovery process of the user equipment is started in a case that it is determined that the user equipment satisfies the first determination condition.

13. A user equipment, comprising:
a processor; and
a memory, configured to store an executable instruction by the processor;
wherein the processor is configured to implement steps of the method according to any one of claims 1 to 9 when executing the executable instruction.

14. A network device, comprising:
a processor; and
a memory, configured to store an executable instruction by the processor;
wherein the processor is configured to implement steps of the method according to claim 10 when executing the executable instruction.

15. A computer-readable storage medium, having a computer program instruction stored thereon, wherein when the program instruction is executed by a processor, steps of the method according to any one of claims 1 to 9 are implemented; or when the program instruction is executed by a processor, steps of the method according to any one of claim 10 are implemented.

16. A chip, comprising a processor and an interface, wherein the processor is configured to read an instruction to perform the method according to any one of claims 1 to 9; or the processor is configured to read an instruction to perform the method according to any one of claim 10.
